# EUROPEAN PATENT SPECIFICATION

(11) **EP 1 589 272 B1**
(45) Date of publication and mention of the grant of the patent: **06.12.2006**
(21) Application number: 05075874.7
(22) Date of filing: 12.04.2005
(51) Int. Cl.: F16L 21/03

(54) **Pipe part provided with a chamfered spigot end part**
Rohrteil mit einem abgeschrägten Zapfenendenteil
Section de tuyau comportant un embout mâle chanfreiné

(30) Priority: 19.04.2004 NL 1025979
(43) Date of publication of application: 26.10.2005
(73) Proprietor: WAVIN B.V., 8011 CW Zwolle (NL)
(72) Inventor: Van Dijk, Berend Jan, 7776 XA Slagharen (NL); De Greef, Peter Evert Jacobus, 7701 CN Dedemsvaart (NL)
(74) Representative: Iemenschot, Johannes Andreas

(56) References cited:
- US-A- 3 282 610
- US-A- 3 831 954
- US-A1- 2002 038 952

## Description

The invention relates to a pipe part provided with a spigot end part which is designed for insertion into a socket end part of a second pipe part, the socket end part being provided on the inside with a sealing ring, and the spigot end part being provided on the end with a part that is chamfered on the outside for the purpose of deformation of the sealing ring during the insertion of the spigot end part into the socket end part, while the envelope of the chamfered part is substantially the shape of a truncated conical surface.

Such a pipe part is known in many different embodiments, see for example US 2002/0038952A1. In the case of the known pipe part the external surface of the chamfered part is the shape of a truncated cone. The external surface then coincides with the envelope of the chamfered part. This has the disadvantage that during the insertion of the spigot end part into a socket end part provided with a sealing ring the insertion force is often regarded as undesirably great. The great insertion force is the result of the fact that during the insertion of the spigot end part the sealing ring has to be deformed around the entire circumference at the same moment. During this process the internal diameter of the sealing ring is generally increased in order to obtain sufficient compression for the desired seal.

Solutions to this problem have already been proposed, but it has been found that these solutions are often difficult to execute in practice, or are expensive.

The object of the invention is to provide a simple solution to the abovementioned problem.

This object is achieved according to the invention in the case of a pipe part of the type mentioned at the beginning by the fact that the chamfered part is provided on the outside with at least two regions which are distributed uniformly around the circumference and in which the external surface of the chamfered part lies radially inwards and at a distance from the envelope of the chamfered part.

In this way it is ensured that during the insertion of the spigot end part the sealing ring is deformed sector by sector, with the result that the force required for this deformation is applied in a manner distributed over time, and the required insertion force is reduced.

Preferred embodiments of the pipe part according to the invention are defined in the subclaims.

The invention will be explained in greater detail in the following description of a number of embodiments with reference to the drawing, in which:
Fig. 1 is a longitudinal section of a particular embodiment of a spigot end part of a pipe part according to the invention and a corresponding socket end part of a second pipe part;
Fig. 2 is a view in perspective of the insert bush used with the spigot end part of Fig. 1;
Fig. 3 is a side view of the insert bush of Fig. 2;
Fig. 4 is a view of the end face of the insert bush of Fig. 2, viewed in the direction of the arrow IV in Fig. 3;
Figs. 5 - 7 are views corresponding to Fig. 4 of slightly modified embodiments of the insert bush of Fig. 2.

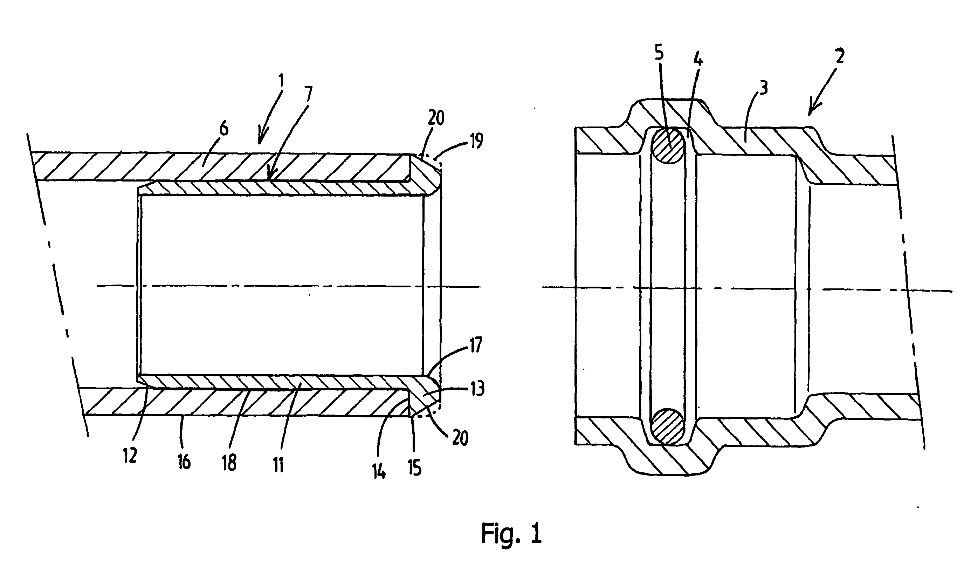

Fig. 1 shows a longitudinal section of a particular embodiment of a spigot end part 1 of a first pipe part according to the invention and also a corresponding socket end part 2 of a second pipe part into which the spigot end part 1 has to be inserted in order to form a pipe connection between the first pipe part 1 and the second pipe part 2. The socket end part 2 has a socket part 3 in which a groove 4 is formed. A sealing ring 5 is fitted in the groove.

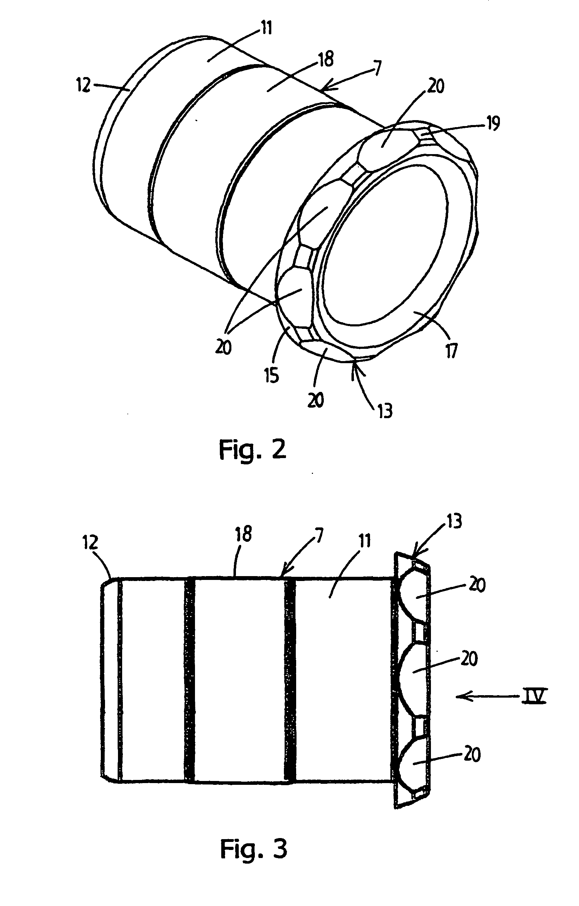

The spigot end part 1 is formed by an end part 6 of the first pipe part and an annular part 7 fitted in the pipe end part 6, which annular part in the embodiment shown is in the form of an insert bush 7. The insert bush 7 is shown separately in Figs. 2 - 4.

The insert bush 7 comprises a tubular part 11. The tubular part 11 is chamfered on the outside at one end in order to facilitate the fitting in the pipe end part 6. The chamfering is indicated by the reference numeral 12. At the other end the insert bush 7 is provided with a collar 13 projecting outwards. The collar 13 lies against the end face 14 of the pipe end part 6, the external surface 15 of the collar 13 making a flush connection with the external surface 16 of the pipe end part 6. At the position of the collar 13 the insert bush 7 is provided on the inside edge with a fillet 17. The tubular part 11 has over a certain part 18 of the length a slightly greater external diameter than that of the remainder of the tubular part 11, in order to obtain good fixing of the insert bush 7 in the pipe end part 6.

The collar 13 is provided with a chamfered part 19 on the outside. Said chamfered part 19 serves to facilitate the insertion of the spigot end part 1 into a socket end part 2 and to deform the sealing ring during the insertion of the spigot end part 1, in particular in the embodiment shown serving to increase the internal diameter of the sealing ring 5. The envelope of the chamfered part 19 is substantially the shape of a truncated cone.

The collar 13 which in this way forms a chamfered part 19 of the spigot end part 1 is provided on the outside with at least two - in the exemplary embodiment of Figs. 1 - 4 with eight - regions 20 which are uniformly distributed around the circumference and in which the external surface of the collar 13 lies radially inwards and at a distance from the envelope of the chamfered part 19. In the embodiment shown, in the abovementioned areas 20 the external surface of the collar is a flat plane. In this way the collar 13 is, as it were, ridged on the external surface. During the insertion of the spigot end part 1 into the socket end part 2 the deformation of the sealing ring, in particular the increase in the internal diameter of the sealing ring 5, occurs more gradually, with the result that the insertion force is lower than is the case with a chamfered part without flattened regions.

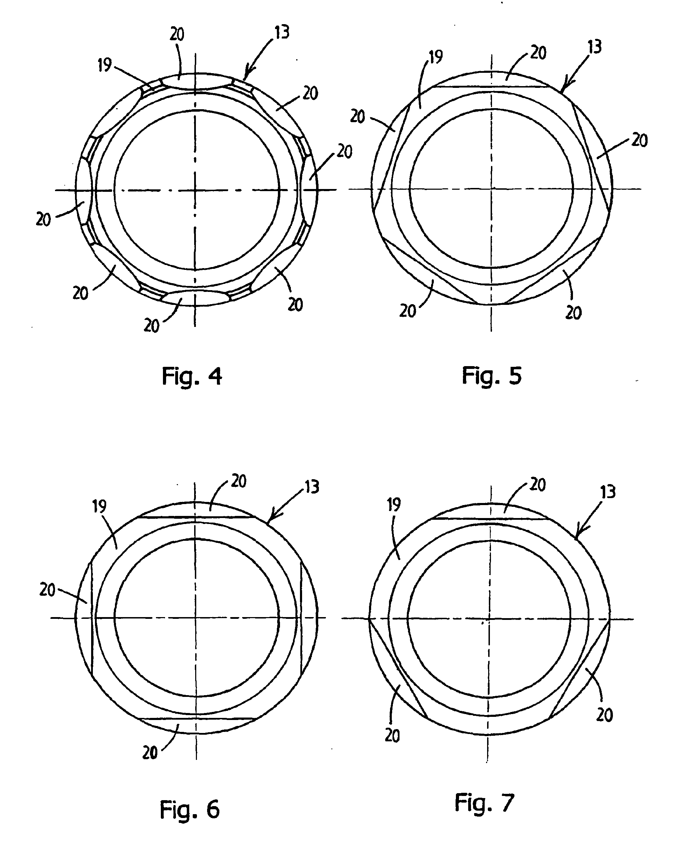

The number of regions 20 in which the external surface of the collar 13 lies radially inwards and at a distance from the envelope of the chamfered part 19 can also be other than eight, and can be, for example, five, four or three, as indicated in Figs. 5 - 7. In general, the number of regions 20 is at least two.

The regions 20 in which the external surface of the collar 13 lies radially inwards and at a distance from the envelope of the chamfered part 19 can also be designed in a different way. For example, they can be formed by making openings in the external surface of the chamfered part 19.

In order to achieve a small insertion force during the insertion of the spigot end part 1 into the socket end part 2, the apex angle of the truncated conical surface forming the envelope of the external surface of the chamfered part 19 would have to be small. However, on the other hand, a small apex angle results in a great length of the chamfered part 19, which requires a great length of the socket part 3 beyond the sealing ring 5. An optimum size for the apex angle lies between 40 and 90 degrees, and preferably around 60 degrees.

In the exemplary embodiment described and shown, the spigot end part of the pipe part according to the invention has an insert bush. It is, however, also possible to design the end edge of a pipe end part itself like the collar of the insert bush, so that the external circumference of the pipe end part at that point is, as it were, ridged. A small insertion force can also be achieved with a spigot end part designed in this way.

In an embodiment not shown the socket end part can be provided with a retaining ring, by means of which the spigot end part can be fixed in a manner resistant to tensile strain in the socket end part. To that end, the retaining ring can be provided with teeth which are directed axially inwards and engage in a spigot end part. In such a case also, the insertion force is reduced with a spigot end part according to the invention, because the deformation of the teeth of the retaining ring also occurs sector by sector.

## Claims

1. Pipe part provided with a spigot end part (1) which is designed for insertion into a socket end part (2) of a second pipe part, the socket end part (2) being provided on the inside with a sealing ring (5), and the spigot end part (1) being provided on the end with a part that is chamfered on the outside for the purpose of deformation of the sealing ring (5) during the insertion of the spigot end part (1) into the socket end part (2), while the envelope of the chamfered part (19) is substantially the shape of a truncated conical surface, **characterized in tha**t the chamfered part (19) is provided on the outside with at least two regions (20) which are distributed uniformly around the circumference and in which the external surface of the chamfered part (19) lies radially inwards and at a distance from the envelope of the chamfered part (19).

2. Pipe part according to claim 1, in which in the abovementioned regions (20) the external surface of the chamfered part (19) is a flat plane.

3. Pipe part according to claim 1 or 2, in which the chamfered part (19) forms part of, or is formed by, a separate annular part (17) which is connected to an end part (16) of the pipe part and together with said end part (6) forms the spigot end part (1).

4. Pipe part according to claim 3, in which the annular part (7) is an insert bush (7) placed in the end part (6) of the pipe part.

5. Pipe part according to claim 4, in which the chamfered part (19) is formed by a collar (13) of the insert bush (7), which collar projects outwards and rests against the end face (14) of the end part (6) of the pipe part.

6. Pipe part according to one of the preceding claims, in which the external surface of the chamfered part (19) makes a flush connection with the external surface of the end part (6) of the pipe part.

7. Pipe part according to one of the preceding claims, in which the apex angle of the truncated conical surface forming the envelope of the external surface of the chamfered part (19) lies between 40 and 90 degrees, preferably around 60 degrees.

8. Pipe part according to one of the preceding claims, in which the socket end part is provided with a retaining ring, by means of which the spigot end part can be fixed in a manner resistant to tensile strain in the socket end part.

9. Pipe part according to claim 8, in which the retaining ring is provided with teeth which are directed axially inwards and engage in a spigot end part.

10. Pipe part according to one of the preceding claims, in which a groove (4) is formed in the socket end part and the sealing ring (5) is fitted in the groove.

## Patentansprüche

1. Rohrstück mit einem Muffenverbindungsendstück (1), welches ausgelegt ist zum Einsetzen in ein Rohransatzendstück (2) eines zweiten Rohrstückes, wobei das Rohransatzendstück (2) im Inneren mit einem Dichtungsring (5) versehen ist und das Muffenverbindungsendstück (1) am Ende ein Stück aufweist, das abgeschrägt an der Außenseite ist zwecks Deformation des Dichtungsrings (5) während des Einsetzens des Muffenverbindungsendstücks (1) in das Rohransatzendstück (2), wobei das Umhüllende des abgeschrägten Stückes (19) im wesentlichen die Gestalt einer kegelstumpfförmigen Fläche hat, **dadurch gekennzeichnet, dass** das abgeschrägte Stück (19) außen zumindest zwei Bereiche (20) aufweist, die gleichmäßig über den Umfang verteilt sind und in denen die Außenfläche des abgeschrägten Stücks (19) radial einwärts und mit einem Abstand zu Umhüllenden des abgeschrägten Stücks (19) liegt.

2. Rohrstück nach Anspruch 1, in welchem in den oben erwähnten Bereichen (20) die Außenfläche des abgeschrägten Stückes (19) eine ebene Fläche ist.

3. Rohrstück nach Anspruch 1 oder 2, in welchem das abgeschrägte Stück (19) zu einem separaten ringförmigen Stück gehört oder von diesem gebildet ist, und welches verbunden ist mit einem Endstück (6) des Rohrstückes und zusammen mit dem besagten Endstück (6) das Muffenverbindungsendstück (1) bilden.

4. Rohrstück nach Anspruch 3, in welchem das ringförmige Stück (7) eine im Endstück (6) des Rohrstückes befestigte Einsatzbuchse (7) ist.

5. Rohrstück nach Anspruch 4, in welchem das abgeschrägte Stück (19) geformt ist von einem Kragen der Einsatzbuchse (7), wobei der Kragen nach außen vorspringt und an der Stirnfläche (14) des Endstücks (6) des Rohres anliegt.

6. Rohrstück nach einem der vorhergehenden Ansprüche, in welchem die Außenfläche des abgeschrägten Stückes (19) eine bündige Verbindung mit der Außenfläche des Endstückes (6) des Rohrstückes darstellt.

7. Rohrstück nach einem der vorhergehenden Ansprüche, in welchem der Winkel der Kegelspitze der Kegelstumpffläche, die die Umhüllende der Außenfläche des abgeschrägten Stückes (19) bildet, zwischen 40 Grad und 90 Grad beträgt, vorzugsweise etwa 60 Grad.

8. Rohrstück nach einem der vorhergehenden Ansprüche, in welchem das Rohransatzstück mit einem Sicherungsring ausgestattet ist, durch den das Muffenverbindungsendstück in dem Muffenverbindungsendstück fixiert werden kann in einer Weise, die Zugbelastung widersteht.

9. Rohrstück nach einem der vorhergehenden Ansprüche, in welchem der Sicherungsring ausgestattet ist mit Zähnen, die axial einwärts gerichtet sind und in ein Muffenverbindungsstück eingreifen.

10. Rohrstück nach einem der vorhergehenden Ansprüche, in welchem eine Nut (4) in das Muffenendstück geformt ist, in die der Dichtungsring (5) eingepasst ist.

## Revendications

1. Elément de tuyau pourvu d'une partie d'extrémité mâle (1) conçue pour être insérée dans une partie d'extrémité femelle (2) d'un second élément de tuyau, la partie d'extrémité femelle (2) étant munie intérieurement d'une bague d'étanchéité (5), et la partie d'extrémité mâle (1) étant munie sur son extrémité d'une portion chanfreinée à l'extérieur en vue de déformer la bague d'étanchéité (5) au cours de l'insertion de la partie d'extrémité mâle (1) dans la partie d'extrémité femelle (2), tandis que l'enveloppe de la portion chanfreinée (19) a sensiblement la forme d'une surface tronconique, **caractérisé en ce que** la portion chanfreinée (19) est disposée extérieurement et comporte au moins deux zones (20) qui sont réparties de manière uniforme autour de la circonférence, et **en ce que** la surface extérieure de la portion chanfreinée (19) s'étend radialement vers l'intérieur et à distance de l'enveloppe de la portion chanfreinée (19).

2. Elément de tuyau selon la revendication 1, dans lequel, dans lesdites zones (20), la surface extérieure de la portion chanfreinée (19) est un plan plat.

3. Elément de tuyau selon la revendication 1 ou 2, dans lequel la portion chanfreinée (19) fait partie d'une partie annulaire (7) séparée ou est formée par celle-ci, partie annulaire qui est reliée à une partie d'extrémité (6) de l'élément de tuyau et qui, conjointement avec ladite partie d'extrémité (6), forme la partie d'extrémité mâle (1).

4. Elément de tuyau selon la revendication 3, dans lequel la partie annulaire (7) est un manchon d'insertion (7) placé dans la partie d'extrémité (6) de l'élément de tuyau.

5. Elément de tuyau selon la revendication 4, dans lequel la portion chanfreinée (19) est formée par une collerette (13) du manchon d'insertion (7), collerette qui fait saillie vers l'extérieur et qui s'appuie contre la face d'extrémité (14) de la partie d'extrémité (6) de l'élément de tuyau.

6. Elément de tuyau selon l'une quelconque des revendications précédentes, dans lequel la surface extérieure de la portion chanfreinée (19) forme une liaison de niveau avec la surface extérieure de la partie d'extrémité (6) de l'élément de tuyau.

7. Elément de tuyau selon l'une quelconque des revendications précédentes, dans lequel l'angle sommital de la surface tronconique formant l'enveloppe de la surface extérieure de la portion chanfreinée (19) se situe entre 40 et 90 degrés, de préférence autour de 60 degrés.

8. Elément de tuyau selon l'une quelconque des revendications précédentes, dans lequel la partie d'extrémité femelle est munie d'une bague de retenue au moyen de laquelle la partie d'extrémité mâle peut être fixée de manière à résister à une contrainte de traction dans la partie d'extrémité femelle.

9. Elément de tuyau selon la revendication 8, dans lequel la bague de retenue est pourvue de dents qui sont dirigées axialement vers l'intérieur et qui viennent en prise avec une partie d'extrémité mâle.

10. Elément de tuyau selon l'une quelconque des revendications précédentes, dans lequel une gorge (4) est formée dans la partie d'extrémité femelle, gorge dans laquelle la bague d'étanchéité (5) est insérée.
